# FASCICULE DE BREVET EUROPEEN

(11) **EP 2 247 404 B1**
(45) Date de publication et mention de la délivrance du brevet: **04.01.2012**
(21) Numéro de dépôt: 09721665.9
(22) Date de dépôt: 06.03.2009
(51) Int. Cl.: B23Q 1/00, B23Q 5/00, B25H 7/04, B23Q 1/26

(54) **MACHINE DE MARQUAGE**
MARKIERUNGSMASCHINE
MARKING MACHINE

(30) Priorité: 07.03.2008 FR 0851489
(43) Date de publication de la demande: 10.11.2010
(73) Titulaire: Sic Marking Holding - Smh, 69380 Lissieu (FR)
(72) Inventeur: BARRAUD, Gérard, F-69640 Rivolet (FR)
(74) Mandataire: Blanchard, Eugène Gilles
(86) Numéro de dépôt international: PCT/FR2009/050370
(87) Numéro de publication internationale: WO 2009/115745

(56) Documents cités:
- EP-A- 1 700 653
- FR-A- 2 555 086

## Description

La présente invention concerne le domaine technique des dispositifs permettant d'assurer le marquage de la surface d'un objet, par déformation de cette dernière notamment.

Ainsi, dans le domaine ci-dessus, il est connu de réaliser le marquage d'objets métalliques par micro percussions, au moyen d'un système de marquage comprenant une pointe qui est animée d'un mouvement alternatif de translation et qui vient frapper la surface à marquer, pour y former un impact sensiblement ponctuel.

Il est alors possible, en déplaçant l'organe de marquage dans deux directions croisées, de réaliser, sur la surface à marquer, des signes en deux dimensions.

Afin d'obtenir ce déplacement croisé de l'organe de marquage, l'organe de marquage est de façon traditionnelle déplacé en translation suivant deux axes X, Y perpendiculaires matérialisés par des rails de guidage ou autre système sur lesquels l'organe de marquage est déplacé dans le plan défini par les axes perpendiculaires par des moyens moteurs commandés automatiquement par des moyens électroniques de commande intégrés généralement dans une console programmable par l'utilisateur.

Ainsi, il est possible, par la combinaison de ces mouvements de translation de déplacer l'organe de marquage dans une fenêtre, dite également de marquage, définie par l'amplitude des mouvements en translation de l'organe de marquage. Les dispositifs fonctionnant sur ce principe permettent alors de réaliser des signes en deux dimensions de bonne qualité.

Afin de marquer des pièces circulaires, il est généralement nécessaire d'utiliser un axe complémentaire de rotation nommé axe D. Cet axe de rotation D est déporté par rapport à l'organe de marquage et il nécessite le mise en oeuvre de moyens moteur de mise en rotation des pièces à graver autour de l'axe D. Ceci implique l'utilisation de moyens électroniques de commande aptes à piloter les trois différents moyens moteurs de déplacement selon chacun des axes X, Y et D. Un exemple d'une telle machine est décrit dans la demande de brevet EP 1 700 653 A.

Or de tels moyens de commande dits « 3 axes » sont généralement assez complexes ce qui augmente fortement les coûts de production et de vente des machines de marquage de ce type, et limite de ce fait le développement de ce type de machine malgré une importante demande des utilisateurs.

Ainsi, il est apparu le besoin de disposer d'un nouveau type de dispositif de marquage qui, tout en conservant le principe de déplacement de l'organe de marquage selon deux axes de translation X, Y par rapport à un troisième axe de rotation D soit d'un coût réduit par rapport aux machines de marquage de ce type connues.

Afin d'atteindre cet objectif, invention concerne un dispositif de marquage d'une surface comportant:
- des moyens de marquage comportant un organe de marquage apte à réaliser un point ou une marque sensiblement ponctuelle,
- des moyens de déplacement de l'organe de marquage dans une fenêtre de marquage selon deux axes X, Y perpendiculaires entre eux et à la surface à marquer pour réaliser des signes sur la surface à marquer, lesdits moyens de déplacement comportant des moyens moteurs,
- des moyens de support et de déplacement de l'objet à marquer en rotation autour d'un axe D parallèle à un au moins des axes X, Y, lesdits moyens de support et de déplacement de l'objet comportant au moins des moyens moteurs d'entrainement en rotation selon l'axe D;
- des moyens automatiques de commande des moyens de déplacement de l'organe de marquage et de l'objet à marquer selon les axes X, Y, D.

Le dispositif de marquage de l'invention se caractérise par le fait que les moyens automatiques de commande intègrent des moyens électroniques d'alimentation et de pilotage des moyens moteurs de déplacement selon les axes X, Y ainsi que des moyens de dérivation de l'alimentation des moyens moteurs de déplacement selon l'axe Y vers les moyens moteurs de déplacement selon l'axe D de manière à piloter les moyens moteurs de déplacement selon l'axe D par les moyens d'alimentation et de pilotage de l'axe Y.

Selon l'invention, les moyens de dérivation de l'alimentation des moyens moteurs de déplacement selon l'axe Y vers les moyens moteurs de déplacement selon l'axe D comportent des systèmes de relais de commutation.

Conformément à une caractéristique préférée, le dispositif de l'invention comporte des moyens de blocage des moyens de déplacement de la tête de marquage selon l'axe Y.

Toujours selon l'invention et dans une première variante, les moyens de blocage comportent un aimant permanent, ou tout autre système mécanique, apte à bloquer les moyens de déplacement de la tête de marquage perpendiculairement selon l'axe Y pendant l'alimentation des moyens moteurs de déplacement selon l'axe D.

Toujours selon l'invention et dans une seconde variante, les moyens de blocage consistent en l'injection par les moyens automatiques de commande d'un courant de maintien dans les moyens moteurs de déplacement selon l'axe Y.

Toujours selon l'invention, les moyens de déplacement de l'organe de marquage selon les axes X, Y comportent au moins un moyen de guidage en translation de l'organe de marquage selon l'axe X parallèlement et à la surface à marquer et qu'au moins un rail de guidage ou autre en translation de l'organe de marquage selon l'axe Y perpendiculairement à l'axe X.

Toujours selon l'invention, les moyens moteurs de déplacement de l'organe de marquage comporte un premier chariot motorisé de déplacement en translation dans les deux sens de l'organe de marquage selon l'axe Y, ainsi qu'un second chariot motorisé de déplacement en translation dans les deux sens de l'organe de marquage selon l'axe X.

De façon préférée, les moyens de marquage comprennent un système à micro percussion comprennent l'organe de marquage, muni d'une pointe de marquage mobile entre une position de repos et de marquage.

De plus, le système de marquage à micro percussion comprend une bobine électromagnétique, à l'intérieur de laquelle est disposé un noyau ferromagnétique qui agit sur la pointe de marquage et qui est mobile en translation, entre une position de repos et de marquage. En variante, le système de marquage à micro percussion peut également comprendre un système pneumatique qui agit sur la pointe de marquage.

Diverses autres caractéristiques de l'invention ressortent de la description ci-dessous effectuée en référence aux dessins annexés qui illustrent une forme préférée, non limitative, de réalisation du dispositif de marquage selon l'invention, telle que définie par les revendications annexées.

La **fig. 1** est perspective de ¾ face d'une forme préférée de réalisation d'un dispositif de marquage selon l'invention.

La **fig. 2** est une vue de dessus partiellement éclatée du dispositif illustré à la **fig. 1**.

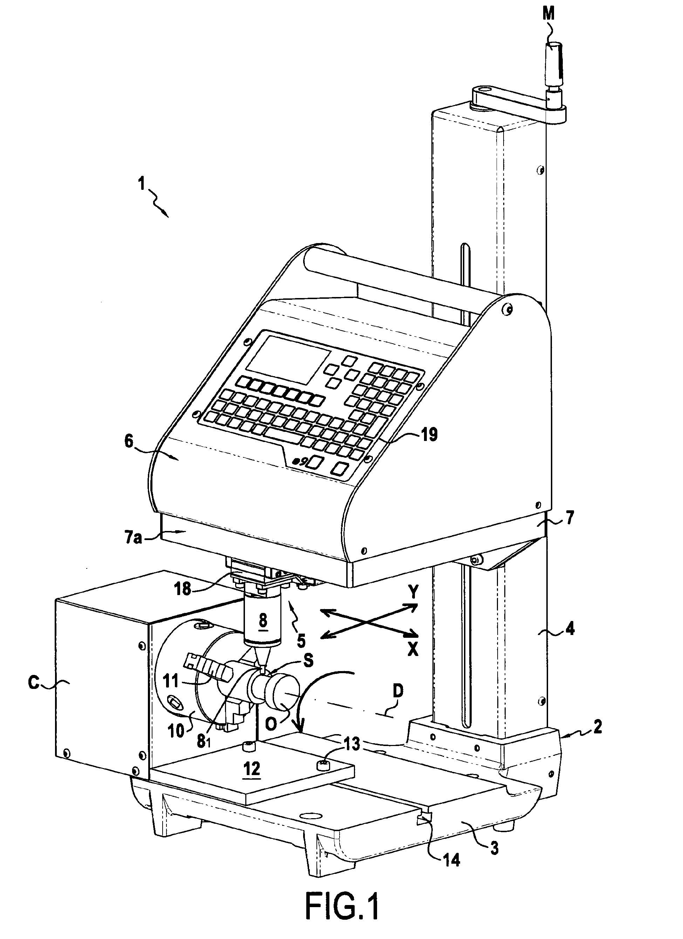

Un dispositif de marquage selon l'invention, tel qu'illustré schématiquement à la **fig. 1** et désigné dans son ensemble par la référence **1**, comprend un châssis porteur **2** qui, selon l'exemple illustré, comprend un pied **3** sur lequel est fixé une potence verticale **4** supportant le système de marquage **5** et sa console de commande **6**, montés sur une platine **7** horizontale. La platine **7** est avantageusement solidaire par un écrou ou une noix d'une vis sans fin intégrée à la potence **4** et actionnable manuellement par une manivelle **M** de sorte que la platine **7**, et donc le système de marquage **5** et sa console de commande sont mobiles verticalement sur la potence verticale de manière à régler la position du système de marquage **5** vis-à-vis d'un objet **O** à marquer.

Le système de marquage **4** est réalisé sous la forme d'un système à micro-percussions électromagnétiques ou autre comprenant un organe de marquage **8**, dont l'extrémité est destinée à venir impacter la surface **S** d'un objet **O** pour y réaliser des déformations en creux ou points d'impacts, comme cela apparaîtra par la suite. L'organe de marquage **8** comprend de préférence une bobine électromagnétique, à l'intérieur de laquelle est disposé un noyau ferromagnétique qui agit sur une pointe de marquage 8₁ et qui est mobile en translation dans la bobine entre une position de repos et une position de marquage.

L'objet **O** est placé entre les mors **11** d'un mandrin **10** de support et de mise en rotation dudit objet **O** autour d'un axe de rotation **D**, ledit mandrin **10** étant accouplé à un moteur électrique d'entrainement disposé dans un carter **C** étant solidaire du pied **3** du dispositif **1** par tous moyens appropriés, et notamment dans l'exemple représenté par l'intermédiaire d'une platine **12** fixée sur le pied **3** de manière coulissante par des tenons ou vis **13** insérés dans une rainure en T **14** formée sur le pied **3**.

Dans la mesure où la pointe de marquage réalise des déformations sensiblement ponctuelles et où il est souhaité, conformément à un objectif de l'invention, réaliser des signes en deux dimensions sur la surface **S** de l'objet **O**, le système de marquage **5** comprend, en outre, des moyens de déplacement **15**, **16**, **17**, **18** de l'organe de marquage **8**.

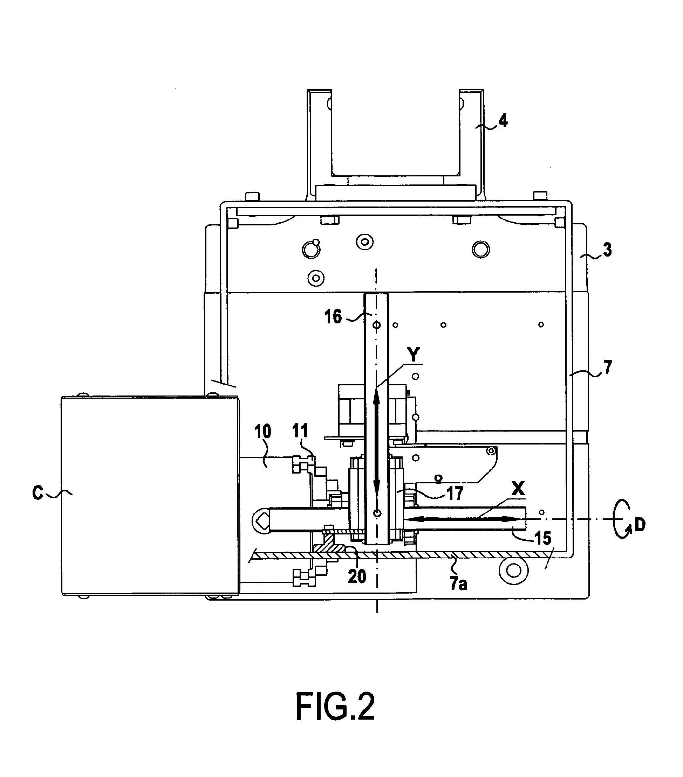

Selon l'exemple illustré sur la **figure 2**, ces moyens de déplacement comportent deux rails de guidage en translation **15**, **16** matérialisant des axes **X** et **Y** perpendiculaires de guidage en translation de l'organe de marquage **8**, qui sont liés à la platine **7** et donc, par cette entremise au châssis **2**.

Le rail **15**, matérialisant l'axe **X** de translation de l'organe de marquage **8**, est parallèle à l'axe **D** de rotation de l'objet **O** sur l'étrier. Le rail **16**, matérialisant l'axe **Y** de translation de l'organe de marquage **8** est quant à lui perpendiculaire au rail **15** et à l'axe **D**.

Le rail **16** formant l'axe **Y** est fixé sur la platine **7**. Le rail **15** quant à lui est monté mobile sur le rail **16** par l'intermédiaire d'un chariot motorisé **17**, comprenant par exemple un moteur électrique pas à pas, permettant la translation du chariot **17** le long du rail **16** selon l'axe **Y**. De plus, le rail **15** porte lui l'organe de marquage **8**, qui est porté sur un second chariot motorisé **18**, lui aussi par exemple équipé d'un moteur électrique pas à pas, solidaire du rail **15**.

L'amplitude de déplacement de l'organe de marquage **8** le long des rails de guidage **15**, **16** définit une fenêtre de marquage dont la longueur est fixée par l'amplitude de la translation selon l'axe **X** et dont la largeur est déterminée par l'amplitude de la translation selon l'axe **Y**. Il est alors possible, lors de la mise en marche du système de marquage **5**, de venir impacter avec la pointe **8₁** de l'organe de marquage tout point de la surface **S** d'un objet **O** situé dans la fenêtre de marquage.

Les chariots motorisés **17**, **18** sont avantageusement alimentés et pilotés par des moyens de commande électronique intégrés à la console de commande **6**. Ces moyens de commande comportent des moyens électroniques d'alimentation et de pilotage des chariots motorisés **17**, **18** de déplacement de la tête de marquage **8** sur les rails **15**, **16** selon les axes **X**, **Y**. Ces moyens de commande sont généralement appelés « driver moteur Y » pour le pilotage du chariot motorisé **17** et « driver moteur X » pour le pilotage du chariot **18**. Ces « driver moteur » X et Y sont de façon avantageuse implémentés directement sur une carte électronique de pilotage intégrée dans la console de commande et programmable par l'utilisateur au moyen d'un clavier **19** sur cette console **6**.

Les moyens électroniques de commande sont également configurés, conformément à la présente invention, pour alimenter et piloter le moteur d'entraînement en rotation autour de l'axe **D** du mandrin **10** de support de l'objet **O** à marquer. Une telle rotation s'avère parfois nécessaire et avantageuse pour marquer des pièces circulaires telles que la pièce **O** représentée sur la **figure 1**, dans la mesure où les rails **15**, **16** et chariots motorisés **17**, **18** ne permettent de mobiliser l'organe de marquage que dans un plan horizontal parallèle à l'axe de rotation **D**.

De façon caractéristique de la présente invention, le pilotage du moteur d'entraînement du mandrin **10** n'est pas assuré par un driver moteur dédié mais par le « driver moteur Y » par dérivation des phases d'alimentation du chariot motorisé **17** vers le moteur d'entraînement du mandrin **10** autour de l'axe **D**.

Pour ce faire, les moyens électroniques de commande comportent des moyens de dérivation, notamment des relais, de l'alimentation du chariot **17** de déplacement de l'organe **8** sur l'axe **16** le moteur d'entrainement du mandrin **10** selon l'axe **D**.

Ainsi, l'électronique de commande du dispositif de marquage 3 axes **X**, **Y**, **D** de l'invention n'intègre que deux commandes d'axes de pilotage, c'est-à-dire les driver moteur **X** et **Y**, le driver moteur **Y** servant à piloter le moteur d'entrainement du mandrin **10** sur l'axe **D**.

La carte électronique reste donc sensiblement identique à celle des machines de marquage dites « 2 axes » ce qui permet de réduire considérablement le coût du dispositif de marquage **1** de l'invention par rapport aux autres machines 3 axes connues.

Pour garantir le positionnement de la tête de marquage **8** sur une génératrice de l'objet **O** porté sur le mandrin **10** pendant la rotation dudit objet autour de l'axe **D**, le chariot motorisé **17** est bloqué en position à une extrémité du rail **15** mécaniquement par un aimant **20**, solidaire dudit chariot **17** et qui vient en butée contre le rebord frontal **7a** de la platine de support **7** du système de marquage **5**. L'aimant **20** est un aimant permanent dimensionné de telle sorte que la force de maintient soit suffisante pour bloquer le chariot **17** en position pendant le marquage de l'objet en rotation sur l'axe **D**, mais pas trop puissant pour que le couple moteur du chariot motorisé **17** une fois l'alimentation de celui-ci rétablie après désactivation du moteur d'axe **D** puisse après le marquage dégager l'aimant du rebord frontal de la platine pour ramener le chariot **17** et l'organe de marquage **8** vers une position d'origine.

Bien entendu, tout autre système mécanique de blocage de l'organe **8** sur le rail **15** peut être également envisagé sans sortir du cadre de l'invention. Il est également possible de bloquer cette position de l'organe **8** en injectant un courant de maintient dans le moteur pas à pas du chariot motorisé **17**.

Le dispositif de marquage de l'invention, et notamment les moyens de commande du système de marquage, sont ainsi constitués qu'à tout moment d'un cycle de marquage de la surface **S** d'un objet **O**, l'alimentation du chariot motorisé de déplacement de l'organe de marquage **8** selon l'axe **Y** peut être basculé vers le moteur d'entraînement du mandrin **10** sur l'axe **D** et inversement, permettant d'avoir des fonctionnalités similaires à une machine 3 axes et de marquer des pièces circulaires sans difficultés avec un dispositif de marquage **1** d'un coût réduit.

La commutation d'alimentation et de pilotage par commande électronique entre le chariot motorisé **17** de déplacement de l'organe de marquage **8** selon l'axe Y et le moteur de pilotage du mandrin **10** selon l'axe **D** permet de se déplacer sur 3 axes dans un même cycle de marquage, pour marquer dans des gorges par exemple, et de faire revenir automatiquement l'organe de marquage **8** en position d'origine en fin de cycle dégageant ainsi l'accès à l'objet **O** une fois marqué pour l'opérateur.

## Revendications

1. Dispositif (**1**) de marquage d'une surface (**S**) d'un objet (**O**) comportant :
• un châssis porteur (**2**),
• des moyens de marquage (**5**) comportant un organe de marquage (**8**) apte à réaliser un point ou une marque sensiblement ponctuelle,
• des moyens de déplacement (**15**,**16**, **17**, **18**) de l'organe de marquage (**8**) dans une fenêtre de marquage selon deux axes (**X**, **Y**) perpendiculaires entre eux et à la surface à marquer (**S**) pour réaliser des signes sur la surface à marquer, lesdits moyens de déplacement comportant des moyens moteurs (**17**, **18**),
• des moyens (**10**) de support et de déplacement de l'objet (**O**) à marquer en rotation autour d'un axe (**D**) parallèle à un au moins des axes (**X**, **Y**), lesdits moyens (**10**) de support et de déplacement de l'objet (**O**) comportant au moins des moyens moteurs d'entrainement en rotation selon l'axe (**D**);
• des moyens automatiques de commande (**6**) des moyens de déplacement de l'organe de marquage (**8**) et de l'objet à marquer (**O**) selon les axes (**X**, **Y**, **D**),
**caractérisé en ce que** les moyens automatiques de commande (**6**) intègrent des moyens électroniques d'alimentation et de pilotage des moyens moteurs (**17**, **18**) de déplacement selon les axes (**X**, **Y**) ainsi que des moyens de dérivation de l'alimentation des moyens moteurs de déplacement selon l'axe (**Y**) vers les moyens moteurs de déplacement selon l'axe (**D**) de manière à piloter les moyens moteurs de déplacement selon l'axe (**D**) par les moyens d'alimentation et de pilotage de l'axe (**Y**).

2. Dispositif de marquage selon la revendication 1, **caractérisé en ce que** les moyens de dérivation de l'alimentation des moyens moteurs de déplacement selon l'axe (**Y**) vers les moyens moteurs de déplacement selon l'axe (**D**) comportent des systèmes de relais électroniques de commutation.

3. Dispositif de marquage selon la revendication 1 ou 2, **caractérisé en ce qu'**il comporte des moyens de blocage des moyens de déplacement de la tête de marquage selon l'axe (**Y**).

4. Dispositif de marquage selon la revendication 3, **caractérisé en ce que** les moyens de blocage comportent un aimant permanent (**20**) apte à bloquer les moyens de déplacement de l'organe de marquage (**8**) perpendiculairement selon l'axe (**Y**) pendant l'alimentation des moyens moteurs de déplacement selon l'axe (**D**).

5. Dispositif de marquage selon la revendication 3, **caractérisé en ce que** les moyens de blocage consistent en l'injection par les moyens automatiques de commande d'un courant de maintien dans les moyens moteurs de déplacement selon l'axe (**Y**).

6. Dispositif de marquage selon l'une des revendications 1 à 5, **caractérisé en ce que** les moyens de déplacement de l'organe de marquage selon les axes (**X**, **Y**) comportent au moins un moyen (**15**) de guidage en translation de l'organe de marquage selon l'axe **X** parallèlement et à la surface à marquer (**S**) et qu'au moins un moyen (**16**) de guidage en translation de l'organe de marquage selon l'axe **Y** perpendiculairement à l'axe **X**.

7. Dispositif de marquage selon l'une des revendications 1 à 6, **caractérisé en ce que** les moyens moteurs de déplacement de l'organe de marquage (**8**) comportent un premier chariot motorisé (**17**) de déplacement en translation dans les deux sens de l'organe de marquage selon l'axe (**Y**), ainsi qu'un second chariot motorisé (**18**) de déplacement en translation dans les deux sens de l'organe de marquage selon l'axe (**X**).

8. Dispositif de marquage selon l'une des revendications 1 à 7, **caractérisé en ce que** les moyens de marquage (**5**) comprennent un système à micro percussion comprenant l'organe de marquage (**8**), muni d'une pointe de marquage (**8₁**) mobile entre une position de repos et de marquage.

9. Dispositif de marquage selon la revendication 8, **caractérisé en ce que** le système de marquage à micro percussion (**5**) comprend une bobine électromagnétique, à l'intérieur de laquelle est disposé un noyau ferromagnétique qui agit sur la pointe de marquage et qui est mobile en translation dans la bobine, entre une position de repos et de marquage.

10. Dispositif de marquage selon la revendication 8, **caractérisé en ce que** le système de marquage à micro percussion (**5**) comprend un système pneumatique qui agit sur la pointe de marquage et qui est mobile en translation dans la bobine, entre une position de repos et de marquage.

## Claims

1. A device (1) for marking a surface (S) of an object (0), the device comprising:
• a support frame (2);
• marker means (5) including a marker member (8) suitable for marking a point or a substantially point-sized mark;
• movement means (15, 16, 17, 18) for moving the marker member (8) in a marking window along two axes (X, Y) that are mutually perpendicular and perpendicular to the surface (S) for marking in order to make signs on the surface for marking, said movement means including motor means (17, 18);
• means (10) for supporting and moving the object (O) for marking in rotation about an axis (D) parallel to at least one of the axes (X, Y), said means (10) for supporting and moving the object (O) including at least motor means for driving in rotation about the axis (D); and
• automatic control means (6) for controlling the means for moving the marker member (8) and the object (O) for marking relative to the axes (X, Y, D);
the device being **characterized in that** the automatic control means (6) incorporate electronic means for powering and controlling motor means (17, 18) for movement along the axis (X, Y) and means for diverting the power supply for the motor means for movement along the axis (Y) to motor means for movement about the axis (D) so as to control the motor means for movement about the axis (D) by the means for powering and controlling relative to the axis (Y).

2. A marker device according to claim 1, **characterized in that** the means for diverting the power supply from the motor means for movement along the axis (Y) to the motor means for movement about the axis (D) comprise electronic switch relay systems.

3. A marker device according to claim 1 or claim 2, **characterized in that** it includes blocking means for blocking the means for moving the marker head along the axis (Y).

4. A marker device according to claim 3, **characterized in that** the blocking means comprise a permanent magnet (20) suitable for blocking the means for moving the marker member (8) perpendicularly along the axis (Y) while powering the motor means for movement about the axis (D).

5. A marker device according to claim 3, **characterized in that** the blocking means consist in the automatic control means injecting a holding current into the motor means for movement along the axis (Y).

6. A marker device according to any one of claims 1 to 5, **characterized in that** the means for moving the marker member along the axes (X, Y) comprise at least one means (15) for guiding the marker member in translation along the axis X parallel to and at the surface (S) for marking, and at least one means (16) for guiding the marker member in translation along the axis Y that is perpendicular to the axis X.

7. A marker device according to any one of claims 1 to 6, **characterized in that** the motor means for moving the marker member (8) comprise a first motor-driven carriage (17) for moving the marker member in translation in both directions along the axis (Y), and a second motor-driven carriage (18) for moving the marker member in translation in both directions along the axis (X).

8. A marker device according to any one of claims 1 to 7, **characterized in that** the marker means (5) comprise a micro-percussion system comprising the marker member (8), having a marker tip (8₁) that is movable between a rest position and a marking position.

9. A marker device according to claim 8, **characterized in that** the micro-percussion marker system (5) comprises an electromagnetic coil having a ferromagnetic core arranged therein, which core acts on the marker tip and is movable in translation inside the coil between a rest position and a marking position.

10. A marker device according to claim 8, **characterized in that** the micro-percussion marker system (5) comprises a pneumatic system that acts on the marking tip and that is movable in translation in the coil between a rest position and a marking position.

## Patentansprüche

1. Vorrichtung (1) zum Markieren einer Fläche (S) eines Gegenstandes (O), umfassend:
- ein Traggestell (2),
- Markierungsmittel (5), die ein Markierungsorgan (8) umfassen, welches geeignet ist, einen Punkt oder eine im wesentlichen punktuelle Markierung herzustellen,
- Mittel zum Bewegen (15, 16, 17, 18) des Markierungsorgans (8) in einem Markierungsfenster entlang von zwei Achsen (X, Y), die untereinander und zu der zu markierenden Fläche (S) senkrecht verlaufen, um auf der zu markierenden Fläche Zeichen zu erzeugen, wobei die Bewegungsmittel Antriebsmittel (17, 18) umfassen,
- Mittel (10) zum Haltern und Drehbewegen des zu markierenden Gegenstandes (O) um eine Achse (D), die zu wenigstens einer der Achsen (X, Y) parallel verläuft, wobei die Mittel (10) zum Haltern und Bewegen des Gegentandes (O) wenigstens Antriebsmittel zum Drehantreiben um die Achse (D) umfassen,
- automatische Mittel zum Steuern (6) der Mittel zum Bewegen des Markierungsorgans (8) und des zu markierenden Gegenstandes (O) entlang der Achsen (X, Y, D),
**dadurch gekennzeichnet, daß** die automatischen Steuermittel (6) elektronische Mittel zur Versorgung und Steuerung der Antriebsmittel (17, 18) zum Bewegen entlang der Achsen (X, Y) sowie Mittel zum Abzweigen der Versorgung der Antriebsmittel zum Bewegen entlang der Achse (Y) zu den Antriebsmitteln zum Bewegen entlang der Achse (D) umfassen, so daß die Antriebsmittel zum Bewegen entlang der Achse (D) durch die Mittel zur Versorgung und Steuerung der Achse (Y) gesteuert werden.

2. Markierungsvorrichtung nach Anspruch 1, **dadurch gekennzeichnet, daß** die Mittel zum Abzweigen der Versorgung der Antriebsmittel zum Bewegen entlang der Achse (Y) zu den Antriebsmitteln zum Bewegen entlang der Achse (D) elektronische Umschaltrelaissysteme umfassen.

3. Markierungsvorrichtung nach Anspruch 1 oder 2, **dadurch gekennzeichnet, daß** sie Mittel zum Blockieren der Mittel zum Bewegen des Markierungskopfes entlang der Achse (Y) umfaßt.

4. Markierungsvorrichtung nach Anspruch 3, **dadurch gekennzeichnet, daß** die Blockiermittel einen Permanentmagneten (20) umfassen, der geeignet ist, während der Versorgung der Antriebsmittel zum Bewegen entlang der Achse (D) die Mittel zum Bewegen des Markierungsorgans (8) senkrecht entlang der Achse (Y) zu blockieren.

5. Markierungsvorrichtung nach Anspruch 3, **dadurch gekennzeichnet, daß** die Blockiermittel darin bestehen, daß durch die automatischen Steuermittel ein Haltestrom in die Antriebsmittel zum Bewegen entlang der Achse (Y) eingespeist wird.

6. Markierungsvorrichtung nach einem der Ansprüche 1 bis 5, **dadurch gekennzeichnet, daß** die Mittel zum Bewegen des Markierungsorgans entlang der Achsen (X, Y) wenigstens ein Mittel (15) zur Verschiebeführung des Markierungsorgans entlang der Achse X parallel zu der zu markierenden Fläche (S) und wenigstens ein Mittel (16) zur Verschiebeführung des Markierungsorgans entlang der Achse Y senkrecht zur Achse X umfassen.

7. Markierungsvorrichtung nach einem der Ansprüche 1 bis 6, **dadurch gekennzeichnet, daß** die Antriebsmittel zum Bewegen des Markierungsorgans (8) einen ersten motorisierten Schlitten (17) zur Verschiebebewegung des Markierungsorgans (8) entlang der Achse (Y) in beide Richtungen sowie einen zweiten motorisierten Schlitten (18) zur Verschiebebewegung des Markierungsorgans entlang der Achse (X) in beide Richtungen umfassen.

8. Markierungsvorrichtung nach einem der Ansprüche 1 bis 7, **dadurch gekennzeichnet, daß** die Markierungsmittel (5) ein Mikroschlagsystem umfassen, welches das Markierungsorgan (8), das mit einer zwischen einer Ruhe- und einer Markierungsposition beweglichen Markierungsspitze (8₁) ausgestattet ist, umfaßt.

9. Markierungsvorrichtung nach Anspruch 8, **dadurch gekennzeichnet, daß** das Mikroschlag-Markierungssystem (5) eine elektromagnetische Spule umfaßt, in der ein ferromagnetischer Kern angeordnet ist, der auf die Markierungsspitze wirkt und der in der Spule zwischen einer Ruhe- und einer Markierungsposition verschiebebeweglich ist.

10. Markierungsvorrichtung nach Anspruch 8, **dadurch gekennzeichnet, daß** das Mikroschlag-Markierungssystem (5) ein pneumatisches System umfaßt, das auf die Markierungsspitze wirkt und das in der Spule zwischen einer Ruhe- und einer Markierungsposition verschiebebeweglich ist.
